(19) Europäisches Patentamt
European Patent Office
Office européen des brevets

(11) **EP 0 946 653 B1**

(12) **FASCICULE DE BREVET EUROPEEN**

(45) Date de publication et mention
de la délivrance du brevet:
**05.09.2001 Bulletin 2001/36**

(51) Int Cl.⁷: $C09C\ 3/06$, $C09C\ 1/36$,
$C09C\ 1/04$, $C09D\ 5/32$

(21) Numéro de dépôt: **97913245.3**

(22) Date de dépôt: **04.11.1997**

(86) Numéro de dépôt international:
**PCT/FR97/01973**

(87) Numéro de publication internationale:
**WO 98/20080 (14.05.1998 Gazette 1998/19)**

(54) **PIGMENTS REVETUS D'UN AGENT ABSORBANT LE RAYONNEMENT ULTRAVIOLET**

MIT UV-STRAHLEN ABSORBIERENDEN MITTEL BESCHICHTETE PIGMENTE

PIGMENTS COATED WITH ULTRAVIOLET RADIATION ABSORBENT

(84) Etats contractants désignés:
**BE CH DE ES FR GB IT LI NL**

(30) Priorité: **05.11.1996 FR 9613452**

(43) Date de publication de la demande:
**06.10.1999 Bulletin 1999/40**

(73) Titulaire: **CENTRE NATIONAL D'ETUDES
SPATIALES
75001 Paris (FR)**

(72) Inventeurs:
• **GUILLAUMON, Jean-Claude
F-31450 Ayguesvives (FR)**

• **NABARRA, Pascale, Véronique
F-31450 Baziege (FR)**

(74) Mandataire: **Colas, Jean-Pierre
Cabinet de Boisse et Colas,
37, avenue Franklin D. Roosevelt
75008 Paris (FR)**

(56) Documents cités:
**US-A- 3 607 338        US-A- 4 460 655
US-A- 5 296 285**

• **CHEMICAL ABSTRACTS, vol. 114, no. 4, 28
janvier 1991 Columbus, Ohio, US; abstract no.
26686a, page 147; XP002034472 & JP 02 204 326
A (TEIKA K. K.) 14 août 1990**

**Description**

L'invention concerne des pigments revêtus d'un agent absorbant le rayonnement ultraviolet, un procédé pour leur préparation, et les peintures les contenant.

Le contrôle thermique de véhicules spatiaux fait appel à diverses techniques, notamment le contrôle thermique passif.

Le contrôle thermique passif est basé sur les propriétés thermo-optiques des revêtements appliqués sur les véhicules spatiaux, c'est-à-dire :

- l'absorptivité solaire ($a_s$) qui est le rapport :

$$a_s = \frac{\text{flux radiatif solaire absorbé}}{\text{flux radiatif solaire incident}}$$

Ce coefficient d'absorption solaire est intégré dans le spectre solaire entre 0,2 et 2,8 $\mu$m.

- l'émissivité e qui est un coefficient de rayonnement de l'énergie dépendant de la nature des revêtements.

Tous les corps émettent, en effet, un rayonnement proportionnel à la quatrième puissance de leur température absolue, à leur surface, au temps et à l'émissivité e.

On a ainsi la relation :

$$W = e\, S\, s\, T^4$$

où

W : énergie échangée par rayonnement entre le corps considéré et son environnement,
S : surface (en cm$^2$)
T : Température du corps (en K)
$S_o$ : constante de Stephan Boltzman = $5,67.10^{-8}$ W/m$^2$.K$^4$

d'où l'on tire :

$$e = \frac{W}{S\, s_o\, T^4}$$

Les revêtements de contrôle thermique passif peuvent se classer en diverses catégories parmi lesquelles on distingue en particulier, en fonction du rapport $a_s/e$ :

- les revêtements froids ($a_s/e < 1$) (par exemple : peintures blanches, films plastiques métallisés, miroirs en quartz, etc...)
- les revêtements chauds ($a_s/e > 1$) (par exemple : peintures noires, dorure, métaux polis, etc...).

Les peintures blanches sont constituées d'un liant, d'au moins un pigment blanc et d'un solvant.

Les pigments blancs les plus utilisés sont : le dioxyde de titane ($TiO_2$), l'oxyde de zinc (ZnO), l'orthotitanate de zinc ($Zn_2 TiO_4$), l'orthostannate de zinc ($Zn_2 SnO_4$), l'orthotitanate d'étain ($Sn TiO_4$), etc... ainsi que les mélanges de ces pigments.

Lorsque les peintures blanches sont exposées à l'environnement spatial, elles subissent une dégradation, notamment des propriétés thermo-optiques (augmentation du coefficient d'absorption solaire : $a_s$), sous l'action combinée des différents facteurs de cet environnement spatial, principalement par l'effet du rayonnement ultra-violet solaire et accessoirement par l'effet du rayonnement particulaire (électrons, protons).

Ce rayonnement solaire se répartit entre 180 et 2800 nm et le rayonnement ultra-violet court (180 à 250 nm) est responsable de la quasi-totalité des dégradations.

Une hypothèse que l'on peut avancer pour expliquer ces dégradations est la suivante :

Sous l'action du rayonnement UV, les pigments blancs, essentiellement des oxydes métalliques $MO_x$, vont perdre de l'oxygène pour donner un produit $MO_{x-y}$ dont les propriétés thermo-optiques ($a_s$) sont dégradées.

L'accroissement du coefficient d'absorption solaire $a_s$ est dommageable au contrôle thermique passif et peut être la source d'échauffements pouvant avoir de graves conséquences sur les composants du véhicule spatial et/ou sur le matériel embarqué.

Il existe donc un besoin pour des pigments blancs dont la dégradation, notamment sous l'effet du rayonnement UV solaire, serait réduite, voire supprimée.

Par ailleurs, les peintures colorées sont constituées d'un liant, d'au moins un pigment coloré et d'un solvant.

Les pigments colorés peuvent être des oxydes de fer, de plomb, de chrome, etc... ou des pigments organiques, par exemple des composés diazoïques, etc...

Lorsque des films de peintures colorées sont exposées au rayonnement UV, cela se traduit par une décoloration, surtout pour les pigments organiques.

Il existe donc aussi un besoin pour des pigments colorés dont la dégradation, notamment sous l'effet du rayonnement UV solaire serait réduite.

La présente invention vise à satisfaire ces besoins et d'autres qui apparaîtront à la lecture de la description qui va suivre.

Plus particulièrement l'invention concerne des pigments sous formé de fines particules ayant une stabilité accrue vis-à-vis du rayonnement ultraviolet solaire et du rayonnement particulaire (électrons, protons), caractérisés en ce que les particules des pigments sont revêtues d'un filtre UV absorbant les rayonnements ultraviolets d'une longueur d'onde inférieure à 300 nm, mais étant transparent entre le proche infrarouge et le proche ultraviolet (soit sensiblement entre 2500 nm et 300 nm) et choisi parmi

- le bromure de potassium (KBr),
- le bromure de thallium (TlBr),
- l'iodure de rubidium (RbI),
- le bromure de césium (CsBr),
- l'iodure de césium (CsI),
- le bromure de rubidium (RbBr),
- le chlorure de rubidium (RbCl),
- le chlorure de potassium (KCl), et
- le chlorure de sodium (NaCl).

La quantité de filtre UV appliquée sur les particules de pigment n'est pas très critique. Habituellement, elle représentera 1 à 15% du poids du pigment.

L'invention concerne aussi un procédé d'amélioration de la stabilité de pigments vis-à-vis du rayonnement ultraviolet ou particulaire, caractérisé en ce qu'il consiste à revêtir des particules d'un pigment d'une solution aqueuse, ou dans un solvant polaire, d'au moins un filtre UV, puis à sécher lesdites particules de pigment de manière à obtenir des particules de pigments revêtues dudit filtre UV, ledit filtre UV absorbant les rayonnements ultraviolets d'une longueur d'onde inférieure à 300 nm, mais étant transparent entre le proche infrarouge et le proche ultraviolet (soit sensiblement entre 2500 nm et 300 nm) et étant choisi parmi

- le bromure de potassium (KBr),
- le bromure de thallium (TlBr),
- l'iodure de rubidium (RbI),
- le bromure de césium (CsBr),
- l'iodure de césium (CsI),
- le bromure de rubidium (RbBr),
- le chlorure de rubidium (RbCl),
- le chlorure de potassium (KCl), et
- le chlorure de sodium (NaCl).

Une méthode de revêtement peut, par exemple, consister à dissoudre un filtre UV dans de l'eau, ou dans un solvant polaire adéquat, en une concentration appropriée, par exemple pouvant varier entre 2% et 30% en poids, selon le filtre UV. Si besoin est, on peut chauffer le mélange pour une meilleure dissolution. Dans la solution résultante, on ajoute le pigment à traiter et l'on agite pendant quelques heures pour rompre les agglomérats de particules éventuellement présents. On laisse décanter le pigment, puis on le sépare de la solution. Après séchage, un broyage final peut être opéré pour rompre les agglomérats de particules éventuellement formés au cours du séchage.

D'autres techniques de revêtement des particules par le filtre UV sont bien évidemment possibles, ainsi que cela sera évident pour l'homme de l'art. On pourrait par exemple utiliser une technique de pulvérisation.

Les pigments blancs revêtus selon l'invention sont notamment utiles pour la fabrication de peintures blanches, en particulier de type spatial.

Les filtres UV qui absorbent les UV en dessous de 300 nm et que l'on peut utiliser dans l'invention, sont les suivants :

- le bromure de potassium (KBr),
- le bromure de thallium (TlBr),
- l'iodure de rubidium (RbI),
- le bromure de césium (CsBr),
- l'iodure de césium (CsI),
- le bromure de rubidium (RbBr),
- le chlorure de rubidium (RbCl),
- le chlorure de potassium (KCl), et
- le chlorure de sodium (NaCl) .

Ces filtres UV sont solubles dans de l'eau ou des solvants polaires, comme les alcools, par exemple les méthanol, l'éthanol, l'isopropanol, etc..., les polyols, par exemple les glycols, etc...

A l'heure actuelle, on préfère tout particulièrement utiliser l'iodure de césium. Celui-ci peut être appliqué, par exemple, sous forme de solution aqueuse à une concentration d'environ 10%, notamment pour les pigments blancs.

L'invention concerne, en outre, une peinture comprenant au moins un pigment, au moins un liant filmogène et, facultativement, au moins un solvant, caractérisé en ce que le pigment est un pigment conforme à l'invention et/ou traité par le procédé de l'invention.

Les peintures de l'invention peuvent s'appliquer en une ou plusieurs couches sur le substrat à peindre en donnant des feuils de peinture d'une épaisseur avantageusement comprise entre 50 et 200 μm.

On peut utiliser n'importe quel liant utile pour la formation des peintures. On peut citer à titre d'exemples non limitatifs, des silicones, du silicate de potassium ou de sodium, des polyuréthannes, des résines époxydes, des résines acryliques, des résines glycérophtaliques, etc...

L'homme de l'art pourra trouver dans l'abondante littérature publiée à ce sujet de nombreux types de liants utilisables. Pour des applications spatiales, on préfère utiliser, comme liants, des résines silicones ou du silicate de potassium ou de sodium.

Le rapport en poids pigment traité/liant sera habituellement dans la gamme de 2 à 12, bien que ces valeurs ne soient pas étroitement critiques.

Comme solvant, on peut utiliser, à titre indicatif, des hydrocarbures aromatiques (toluène, xylène, naphta, etc...), des cétones (méthyléthylcétone, méthylisobutylcétone, diacétone alcool, etc...), des esters (acétate d'éthylèneglycol, acétate de butylèneglycol, etc...) des éthers de glycol (éthylglycol, butylglycol, méthylène glycol, propylène glycol, etc...), des alcools (éthanol, propanol, butanol, etc...) et de l'eau. La proportion de solvant sera habituellement comprise dans la gamme de 0 à 60% en poids par rapport au poids total de la peinture. La valeur de 0% en poids correspond à des peintures sans solvant.

L'application des couches de peinture contenant les pigments traités de l'invention sur un substrat peut s'effectuer au pistolet à peinture, à la brosse ou par toute autre technique connue.

Les peintures de l'invention peuvent être appliquées sur toutes sortes de substrats tels que des métaux, des films polymériques ou des matériaux composites. Si désiré, ou nécessaire, on peut appliquer une couche primaire d'accrochage ou toute autre couche primaire avant d'appliquer les peintures de l'invention.

Outre son utilisation sur véhicules ou engins spatiaux, les peintures de l'invention sont utiles dans les industries aéronautiques, automobiles ou du bâtiment.

Les exemples non limitatifs suivants sont donnés en vue d'illustrer l'invention.

Dans les exemples conformes à l'invention, le pigment utilisé a été préparé par le mode opératoire suivant : dans 400 ml de la solution aqueuse de filtre UV indiquée dans les exemples, on a ajouté 200 g du pigment à traiter et on a agité le tout pendant 4 heures. On a laissé décanter le pigment, puis on l'a séparé de la solution sur un büchner. On a séché ensuite le pigment dans une étuve à 100°C pendant 16 heures. Un rebroyage final a été effectué, si nécessaire, en cas de présence d'agglomérats de particules de pigments.

EXEMPLE 1 (comparatif)

Dans cet exemple et les exemples suivants, la méthode de test des peintures de l'invention est la suivante : ce test accéléré est destiné à apprécier la tenue à l'environnement spatial, notamment au rayonnement UV solaire, de revêtements de contrôle thermique de véhicules spatiaux. Les échantillons de revêtements à tester sont positionnés sur un porte-échantillon maintenu à 40°C pendant toute la durée de l'essai et situé dans une enceinte à vide dont le niveau se situe autour de 5 x 10$^{-7}$ Torr.

Les irradiations ultraviolettes sont effectuées à partir d'une source Xénon à arc court de 4000 Watts suivie d'un double filtrage interférentiel délivrant deux bandes ultraviolettes. Les conditions d'irradiation sont les suivantes :

- bande 200 à 300 nm : environ 1000 équivalents d'heures solaires (ehs) réalisées à un facteur d'accélération voisin de 2,5 soit une puissance incidente de l'ordre de : 2,5 x 1,62 = 4,05 mw/cm$^2$ ;
- bande 300 à 400 nm : environ 1000 équivalents d'heures solaires réalisées à un facteur d'accélération voisin de 2,5 soit une puissance incidente de l'ordre de 2,5 x 10,2 = 25,5 mw/cm$^2$.

Il est à noter que les valeurs de 1,62 et de 10,2 susmentionnées correspondent à l'énergie du rayonnement U.V. solaire intégré entre 200 et 300 nm, et entre 300 et 400nm, respectivement.

Les irradiations sont menées en continu dans les intervalles de temps séparant les points de mesures effectués à 0,200 et 1000 ehs.

Les irradiations particulaires ont été estimées pour différentes énergies afin d'approcher au mieux le profil de dose théorique calculé pour le matériau de référence sur l'orbite géostationnaire.

On calcule les profils de dose sur un an d'orbite géostationnaire pour deux énergies en protons et une énergie en électrons retenus pour cette stimulation.

Lors des essais les irradiations ont été effectuées séparées par des points de mesures intermédiaires en reproduisant le profil de dose d'abord en profondeur dans le matériau puis en progressant vers la surface. Les closes totales ont été appliquées en cohérence avec la durée équivalente de simulation pour l'orbite géostationnaire représentée par 1000 ehs sur les faces Nord et Sud d'un satellite stabilisé 3 axes, soit 0,9 an.

En conséquence ont été appliquées dans l'ordre :

- 0,9 x 10$^{15}$ électrons par cm$^2$ d'énergie 400 keV
- 1,8 x 10$^{14}$ protons par cm$^2$ d'énergie 240 keV
- 1,8 x 10$^{15}$ protons par cm$^2$ d'énergie 45 keV

Les mesures optiques réalisées in situ consistent à mesurer la réflectance spectrale (dans la plage 250 à 2400 nm) relativement à un échantillon de référence constitué par une couche mince d'aluminium évaporé sur un substrat de verre. Le système utilisé comprend un spectrophotomètre PERKIN ELMER $\lambda$ 9 associé à une sphère intégrante à échantillon latéral pouvant être placée sous vide.

Ces mesures relatives sont complétées par des mesures absolues réalisées en début et en fin d'essai, à l'air, à l'aide d'un spectromètre CARY 2300 associé à une sphère intégrante à échantillon central. La correspondance effectuée en début d'essai pour chaque échantillon entre le spectre relatif in situ à l'air et le spectre absolu donne les coefficients correctifs à chaque longueur d'onde qui sont appliqués à tous les spectres relatifs in situ ultérieurs.

A chaque spectre de réflexion est associée la valeur de la réflectance solaire calculée à partir des valeurs spectrales prises dans l'intervalle de 250 à 2400 nanomètres.

La valeur de la réflectance solaire ($\rho_s$) permet d'atteindre le coefficient d'absorption solaire ($\alpha_s$) par la relation :

$\alpha_s = 1 - \rho_s$ pour un échantillon de revêtement opaque au rayonnement solaire.

Les variations de réflectance solaire ou du coefficient d'absorption solaire, en cours d'irradiation, permettent de suivre la dégradation des revêtements sous l'action du rayonnement ultraviolet et particulaire.

La peinture de l'exemple 1 contient le pigment orthotitanate de zinc non traité.

Cet exemple servira de référence et de point de comparaison par rapport à des peintures élaborées à partir de pigments selon l'invention.

On obtient un revêtement blanc dont l'épaisseur après séchage est proche de 100 micromètres, en appliquant sur un substrat une peinture préparée par le mode opératoire suivant : à 11,50 g du liant silicone RTV 121 de RHONE-POULENC, on ajoute 21 g de toluène, on agite manuellement, on ajoute ensuite 69 g d'orthotitanate non traité ($Zn_2TiO_4$) à la solution obtenue en agitant.

Après cela, on broie le mélange dans un flacon en verre de 250 ml avec 100 g de billes de verre dans un broyeur RED DEVIL pendant 30 minutes.

On sépare la composition obtenue des billes par tamisage.

On incorpore 0,25 g de catalyseur 10028 (RHONE-POULENC) et 18 g d'un diluant préparé à partir de 47 parties en poids de toluène, 47 parties en poids de diacétate d'éthylène glycol et 6 parties en poids d'éther monoéthylique d'éthylène glycol, juste avant application de la peinture.

Le rapport pigment/liant (P/L) est de 6.

Après irradiations ultraviolettes de 1000 ehs, le facteur d'absorption solaire ($\alpha$s) s'est dégradé de $\Delta\alpha$s = 0,08 et $\Delta\alpha$s = 0,28 pour une simulation de 0,9 an en orbite géostationnaire.

### EXEMPLE 2

On obtient un revêtement blanc dont l'épaisseur après séchage est proche de 100 micromètres, en appliquant sur un substrat une peinture dont la composition est la suivante :

- liant silicone RTV 121 (11,5 g) et catalyseur 10028 (0,25 g)
- pigment : orthotitanate de zinc ayant été traité dans une solution à 10% en poids de chlorure de sodium
- solvants : mélange de toluène, d'ester et d'éther de l'exemple 1.

Le rapport P/L est de 6.

Après irradiations ultraviolettes de 1000 ehs, le facteur d'absorption solaire ($\alpha_s$) s'est dégradé de $\Delta\alpha$s = 0,041 et $\Delta\alpha$s = 0,267 pour une simulation de 0,9 an en orbite géostationnaire.

### EXEMPLE 3

On obtient un revêtement blanc dont l'épaisseur après séchage est proche de 100 micromètres, en appliquant sur un substrat une peinture dont la composition est la suivante :

- liant silicone RTV 121 (11,5 g) et catalyseur 10028 (0,25 g)
- pigment : orthotitanate de zinc ayant été traité dans une solution à 10% en poids de bromure de potassium
- solvants : mélange de toluène, d'ester et d'éther de l'exemple 1.

Le rapport P/L est de 6.

Après irradiations ultraviolettes de 1000 ehs, le facteur d'absorption solaire ($\alpha_s$) s'est dégradé de $\Delta\alpha$s = 0,042 et $\Delta\alpha$s = 0,243 pour une simulation de 0,9 an en orbite géostationnaire.

### EXEMPLE 4

On obtient un revêtement blanc dont l'épaisseur après séchage est proche de 100 micromètres, en appliquant sur un substrat une peinture dont la composition est la suivante :

- liant silicone RTV 121 (11,5 g) et catalyseur 10028 (0,25 g)
- pigment : orthotitanate de zinc ayant été traité dans une solution à 10% en poids de chlorure de rubidium
- solvants : mélange de toluène, d'ester et d'éther de l'exemple 1.

Le rapport P/L est de 6.

Après irradiations ultraviolettes de 1000 ehs, le facteur d'absorption solaire ($\alpha_s$) s'est dégradé de $\Delta\alpha$s = 0,049 et $\Delta\alpha$s = 0,251 pour une simulation de 0,9 an en orbite géostationnaire.

### EXEMPLE 5

On obtient un revêtement blanc dont l'épaisseur après séchage est proche de 100 micromètres, en appliquant sur un substrat une peinture dont la composition est la suivante :

- liant silicone RTV 121 (11,5 g) et catalyseur 10028 (0,25 g)
- pigment : orthotitanate de zinc ayant été traité dans une solution à 10% en poids de bromure de césium
- solvants : mélange de toluène, d'ester et d'éther de l'exemple 1.

Le rapport P/L est de 6.

Après irradiations ultraviolettes de 1000 ehs, le facteur d'absorption solaire ($\alpha_s$) s'est dégradé de $\Delta\alpha$s = 0,060 et $\Delta\alpha$s = 0,265 pour une simulation de 0,9 an en orbite géostationnaire.

### EXEMPLE 6

On obtient un revêtement blanc dont l'épaisseur après séchage est proche de 100 micromètres, en appliquant sur un substrat une peinture dont la composition est la suivante :

- liant silicone RTV 121 (11,5 g) et catalyseur 10028 (0,25 g)
- pigment : orthotitanate de zinc ayant été traité dans une solution à 10% en poids d'iodure de césium
- solvants : mélange de toluène, d'ester et d'éther de l'exemple 1.

Le rapport P/L est de 6.

Après irradiations ultraviolettes de 1000 ehs, le facteur d'absorption solaire ($\alpha_s$) s'est dégradé de $\Delta\alpha s$ = 0,047 et $\Delta\alpha s$ = 0,156 pour une simulation de 0,9 an en orbite géostationnaire.

Il va de soi que les modes de réalisation décrits ne sont que des exemples et qu'on pourrait les modifier, notamment sans substitution d'équivalents techniques, sans sortir pour cela du cadre de l'invention.

## Revendications

1.  Pigments sous forme de fines particules ayant une stabilité accrue vis-à-vis du rayonnement ultraviolet solaire et du rayonnement particulaire (électrons, protons) **caractérisés en ce que** les particules des pigments sont revêtues d'un filtre UV absorbant les rayonnements ultraviolets d'une longueur d'onde inférieure à 300 nm, mais étant transparent entre le proche infrarouge et le proche ultraviolet (soit sensiblement entre 2500 nm et 300 nm) et choisi parmi

    - le bromure de potassium (KBr),
    - le bromure de thallium (TlBr),
    - l'iodure de rubidium (RbI),
    - le bromure de césium (CsBr),
    - l'iodure de césium (CsI),
    - le bromure de rubidium (RbBr),
    - le chlorure de rubidium (RbCl),
    - le chlorure de potassium (KCl), et
    - le chlorure de sodium (NaCl).

2.  Pigments selon la revendication 1, **caractérisés en ce que** le filtre UV est l'iodure de césium.

3.  Pigments selon la revendication 1 ou 2, **caractérisés en ce que** la quantité de filtre UV représente de 1 à 15% du poids du pigment.

4.  Procédé d'amélioration de la stabilité de pigments vis-à-vis du rayonnement ultraviolet ou particulaire, **caractérisé en ce qu'**il consiste à revêtir des particules d'un pigment d'une solution aqueuse, ou dans un solvant polaire, d'au moins un filtre UV, puis à sécher lesdites particules de pigment de manière à obtenir des particules de pigment revêtues dudit filtre UV, ledit filtre UV absorbant les rayonnements ultraviolets d'une longueur d'onde inférieure à 300 nm, mais étant transparent entre le proche infrarouge et le proche ultraviolet (soit sensiblement entre 2500 nm et 300 nm) et étant choisi parmi

    - le bromure de potassium (KBr),
    - le bromure de thallium (TlBr),
    - l'iodure de rubidium (RbI),
    - le bromure de césium (CsBr),
    - l'iodure de césium (CsI),
    - le bromure de rubidium (RbBr),
    - le chlorure de rubidium (RbCl),
    - le chlorure de potassium (KCl), et
    - le chlorure de sodium (NaCl) .

5.  Procédé selon la revendication 4, **caractérisé en ce que** le filtre UV est l'iodure de césium.

6.  Procédé selon la revendication 4 ou 5, **caractérisé en ce qu'**on applique de 1 à 15% de filtre UV par rapport au poids du pigment.

7.  Procédé selon l'une quelconque des revendications 4 à 6, **caractérisé en ce qu'**il comprend une opération supplémentaire consistant à broyer le pigment après séchage.

8.  Peinture comprenant au moins un pigment, au moins un liant filmogène, et, facultativement, au moins un solvant, **caractérisée en ce que** le pigment est un pigment tel que défini à l'une quelconque des revendications 1 à 3, et/ou traité par un procédé tel que défini à l'une quelconque des revendications 4 à 7.

9.  Peinture selon la revendication 8, **caractérisée en ce qu'**elle est de couleur blanche et comprend un pigment choisi parmi le dioxyde de titane (TiO$_2$), l'oxyde de zinc (ZnO), l'orthotitanate de zinc (Zn$_2$, TiO$_4$), l'orthostannate de zinc (Zn$_2$, SnO$_4$), l'orthotitanate d'étain (Sn TiO$_4$, ainsi que les mélanges de ces pigments.

10. Utilisation d'une peinture telle que définie à la revendication 8 ou 9 sur des engins spatiaux.

## Patentansprüche

1.  Pigmente in Form von feinen Teilchen mit erhöhter Stabilität gegenüber UV-Sonnenstrahlung und Teilchenstrahlung (Elektronen, Protonen), **dadurch gekennzeichnet**, dass die Pigmentteilchen mit einem UV-Filter beschichtet sind, der die ultravioletten Strahlen mit einer Wellenlänge unter 300 nm absorbiert, aber zwischen dem nahen Infrarot und dem nahen Ultraviolett (d.h. im wesentlichen zwischen 2500 nm und 300 nm) transparent ist und der ausgewählt ist aus:

- Kaliumbromid (KBr),
- Thalliumbromid (TlBr)
- Rubidiumjodid (RbI),
- Cäsiumbromid (CsBr),
- Cäsiumjodid (CsI),
- Rubidiumbromid (RbBr),
- Rubidiumchlorid (RbCl),
- Kaliumchlorid (KCl) und
- Natriumchlorid (NaCl).

2. Pigmente nach Anspruch 1, **dadurch gekennzeichnet**, dass der UV-Filter Cäsiumjodid ist.

3. Pigmente nach Anspruch 1 oder 2, **dadurch gekennzeichnet**, dass die UV-Filtermenge 1 bis 15% des Gewichts des Pigments darstellt.

4. Verfahren zur Verbesserung der Stabilität von Pigmenten gegenüber UV- oder Teilchenstrahlung, **dadurch gekennzeichnet**, dass Teilchen eines Pigments mit mindestens einem UV-Filter in wässriger Lösung oder in einem polaren Lösungsmittel beschichtet werden und dann diese Pigmentteilchen so getrocknet werden, dass man mit diesem UV-Filter beschichtete Pigmentteilchen erhält, wobei dieser UV-Filter UV-Strahlen mit einer Wellenlänge unter 300 nm absorbiert, aber zwischen dem nahen Infrarot und dem nahen Ultraviolett (d.h. im wesentlichen zwischen 2500 nm und 300 nm) transparent ist, und ausgewählt ist aus:

- Kaliumbromid (KBr),
- Thalliumbromid (TlBr)
- Rubidiumjodid (RbI),
- Cäsiumbromid (CsBr),
- Cäsiumjodid (CsI),
- Rubidiumbromid (RbBr),
- Rubidiumchlorid (RbCl),
- Kaliumchlorid (KCl) und
- Natriumchlorid (NaCl).

5. Verfahren nach Anspruch 4, **dadurch gekennzeichnet**, dass der UV-Filter Cäsiumjodid ist.

6. Verfahren nach Anspruch 4 oder 5, **dadurch gekennzeichnet**, dass man 1 bis 15% UV-Filter, bezogen auf das Gewicht des Pigments, aufbringt.

7. Verfahren nach einem der Ansprüche 4 bis 6, **dadurch gekennzeichnet**, dass es einen zusätzlichen Arbeitsgang umfasst, der darin besteht, dass das Pigment nach der Trocknung gemahlen wird.

8. Farbanstrich, der mindestens ein Pigment, mindestens ein filmbildendes Bindemittel und wahlweise mindestens ein Lösungsmittel enthält, **dadurch gekennzeichnet**, dass das Pigment ein Pigment nach einem der Ansprüche 1 bis 3 ist und/oder ein in einem Verfahren nach einem der Ansprüche 4 bis 7 behandeltes Pigment ist.

9. Farbanstrich nach Anspruch 8, **dadurch gekennzeichnet**, dass er von weißer Farbe ist und ein Pigment enthält, das aus Titandioxid (TiO$_2$), Zinkoxid (ZnO), Zinkorthotitanat (Zn$_2$TiO$_4$), Zinkorthostannat (Zn$_2$SnO$_4$), Zinnorthotitanat (SnTiO$_4$) sowie aus Mischungen dieser Pigmente ausgewählt ist.

10. Verwendung eines Farbanstrichs nach Anspruch 8 oder 9 auf Weltraumfahrzeugen.


**Claims**

1. Pigments in the form of fine particles having enhanced stability with respect to solar ultraviolet radiation and particle radiation (electrons, protons), **characterized in that** the pigment particles are coated with a UV filter which absorbs ultraviolet radiation with a wavelength below 300 nm, but is transparent between the near infrared and the near ultraviolet (that is to say substantially between 2500 nm and 300 nm) and is selected from

- potassium bromide (KBr),
- thallium bromide (TlBr),
- rubidium iodide (RbI),
- caesium bromide (CsBr),
- caesium iodide (CsI),
- rubidium bromide (RbBr),
- rubidium chloride (RbCl),
- potassium chloride (KCl), and
- sodium chloride (NaCl).

2. Pigments according to Claim 1, **characterized in that** the UV filter is caesium iodide.

3. Pigments according to Claim 1 or 2, **characterized in that** the amount of UV filter represents from 1 to 15 % of the weight of the pigment.

4. Method for improving the stability of pigments with respect to ultraviolet or particle radiation, **characterized in that** it consists in coating particles of a pigment with an aqueous solution, or a solution in a polar solvent, of at least one UV filter, then in drying the said pigment particles so as to obtain pigment particles coated with the said UV filter which absorbs ultraviolet radiation with a wavelength below 300 nm, but is transparent between the near infrared and the near ultraviolet (that is to say substantially between 2500 nm and 300 nm) and is selected from

- potassium bromide (KBr),
- thallium bromide (TlBr),
- rubidium iodide (RbI),
- caesium bromide (CsBr),
- caesium iodide (CsI),
- rubidium bromide (RbBr),
- rubidium chloride (RbCl),
- potassium chloride (KCl), and
- sodium chloride (NaCl).

5.  Method according to Claim 4, **characterized in that** the UV filter is caesium iodide.

6.  Method according to Claim 4 or 5, **characterized in that** the amount of UV filter represents from 1 to 15 % of the weight of the pigment.

7.  Method according to any one of Claims 4 to 6, **characterized in that** it comprises an additional operation consisting in grinding the pigment after drying.

8.  Paint comprising at least one pigment, at least one film-forming binder, and optionally at least one solvent, **characterized in that** the pigment is a pigment as defined in any one of Claims 1 to 3, and/or treated by a method as defined in any one of Claims 4 to 7.

9.  Paint according to Claim 8, **characterized in that** it is white in colour and comprises a pigment selected from titanium dioxide ($TiO_2$), zinc oxide (ZnO), zinc orthotitanate ($Zn_2TiO_4$), zinc orthostannate ($Zn_2SnO_4$), tin orthotitanate ($SnTiO_4$), as well as mixtures of these pigments.

10. Use of a paint as defined in Claim 8 or 9 on space-crafts.